# EUROPEAN PATENT SPECIFICATION

(11) **EP 3 168 599 B1**
(45) Date of publication and mention of the grant of the patent: **01.01.2020**
(21) Application number: 16198456.2
(22) Date of filing: 11.11.2016
(51) Int. Cl.: G01N 21/25, G01N 21/27, G01N 21/51, G01N 21/75, G01N 35/02, G01N 35/00

(54) **REACTION MEASURING UNIT AND ANALYZER**
REAKTIONSMESSEINHEIT UND -ANALYSATOR
UNITÉ DE MESURE ET ANALYSEUR DE RÉACTION

(30) Priority: 13.11.2015 JP 2015222959
(43) Date of publication of application: 17.05.2017
(73) Proprietor: FURUNO ELECTRIC CO., LTD., Nishinomiya-City, Hyogo 662-8580 (JP)
(72) Inventor: TANAKA, Tatsunori, Nishinomiya-City, Hyogo 662-8580 (JP)
(74) Representative: Müller Hoffmann & Partner

(56) References cited:
- JP-A- S59 180 364
- JP-B2- H0 736 021
- US-A- 4 863 693
- US-A1- 2002 182 110
- US-A1- 2007 181 787
- US-A1- 2008 240 995
- US-A1- 2011 255 090

## Description

### Technical Field

This disclosure relates to a reaction measuring unit which measures reaction between a specimen and a reagent, and an analyzer which includes the reaction measuring unit.

### Background of the Invention

Conventionally, analyzers which analyzes a component of a specimen by causing reaction between the specimen and a reagent. The analyzer by causes reaction between the specimen and the reagent in a reaction vessel at a given temperature suitable for analysis, and measures an optical characteristic by a photometric part.

The photometric part includes a light receiver (first optical unit) and a light emitter (second optical unit). For example, JP2014-202631A discloses an photometric part disposed below a reaction container which contains reaction vessels. A light receiver is inserted into the reaction container from below. Light emitted from a light emitter disposed on a circumferential side of the reaction container is received by the light receiver through the reaction vessel.

The photometric part requires periodic maintenance due to dust adhesion. However, since the light receiver of the photometric part is inserted into the reaction container from underneath the reaction vessel as described above, the reaction container needs to be removed for the maintenance of the photometric part. Once the reaction container is removed, the position of the reaction container and the positions of the light emitter and the light receiver require fine adjustment.

JP S59 180 364 A discloses an automatic analyzing device comprising a plurality of reaction vessels held in a reaction vessel holding member. At a measurement position, an optical fiber connected to a spectroscope and a photodetector enclose a vessel for measurement.

US 4 863 693 A shows an analysis instrument with a molded ring designed to hold a plurality of cuvettes. A photometer is rotatably mounted with respect to the molded ring holding the cuvettes and positionable at any selected position about the periphery of the mold ring to thereby monitor the contents of the reaction chamber at that location on the mold ring.

JP H07 36 021 B2 discloses an automatic chemical analyzer configured to monitor variations in the optical nature for a plurality of reaction vessels. A moving device for a photometer is engaged with a guiding member of a reaction vessel movably through a synchronizer.

US 2011/255 090 A1 describes a photometer and analyzing system provided with such. A reaction cell containing a sample is arranged between a LED light source and a photodetector.

US 2002/182 110 A1 discloses a device and method for analyzing body fluids. The device comprises a plurality of cuvettes which are connected to one another in a circular arrangement. The sample and necessary reagents are forced into a reaction chamber by spinning the cuvettes and driving the fluids into the reaction chamber by centrifugal force, where the result of the reaction is detected by a photosensor.

### Summary of the Invention

The purpose of this disclosure relates to providing a reaction measuring unit and an analyzer, in which maintenance of a photometric part is easily performed without removing a reaction container.

This problem is solved by the subject-matter of the independent claim.

As above, the photometric part is suspended from one of the reaction container and the supporting member supporting the reaction container, and thus, it is possible to easily detach the photometric part from the reaction container without removing the reaction container.

### Effect of the Invention

According to this disclosure, maintenance of a photometric part is easily performed without removing a reaction container.

### Brief Description of the Drawings

The present disclosure is illustrated by way of example and not by way of limitation in the figures of the accompanying drawings, in which the like reference numerals indicate like elements and in which:
Fig. 1 is a plan view illustrating a structure of a biochemical analyzer 100 according to one embodiment of this disclosure;
Fig. 2 is a perspective view of a reaction measuring unit 2;
Fig. 3 is a plan view of the reaction measuring unit 2;
Fig. 4A is a plan view of a bottom plate member 29 and Fig. 4B is a plan view of a supporting member 27;
Fig. 5 is a partially-enlarged view of the reaction measuring unit 2;
Fig. 6 is a side view of the reaction measuring unit 2;
Fig. 7 is a cross-sectional view of the reaction measuring unit 2; and
Fig. 8 is a partial cross-sectional view of the biochemical analyzer 100.

### Detailed Description of the Invention

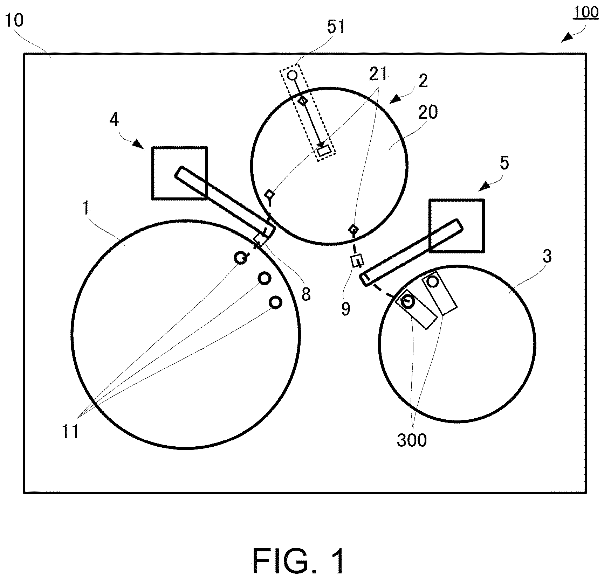

Fig. 1 is a plan view illustrating a structure of a biochemical analyzer 100 according to one embodiment of this disclosure. The biochemical analyzer 100 includes a reagent unit 1, a reaction measuring unit 2, a specimen unit 3, a reagent dispensing unit 4, a specimen dispensing unit 5, a cleansing part 8, and a cleansing part 9. The biochemical analyzer 100 is one example of the analyzer of this disclosure.

The reagent unit 1 is provided with a plurality reagent vessels 11. Each reagent vessel 11 is cooled at a given temperature (e.g., around 4°C). The specimen unit 3 is provided with a plurality of specimen vessels 300, each configured to contain specimens. A reaction container 20 of the reaction measuring unit 2 is provided with a plurality of reaction vessels 21, each configured to cause reaction between the specimen and a reagent. Note that although only some of the specimen vessels 11, the reaction vessels 21, and the specimen vessels 300 are illustrated in Fig. 1, actually, a larger number of vessels than the number illustrated in Fig. 1 are provided.

The cleaning part 8 is disposed between the reagent unit 1 and the reaction measuring unit 2, and cleanses a probe of the reagent dispensing unit 4. Further the cleaning part 9 is disposed between the specimen unit 3 and the reaction measuring unit 2, and cleanses a probe of the specimen dispensing unit 5.

The biochemical analyzer 100 dispenses a specimen from the specimen vessel 300 to the reaction vessel 21 by the specimen dispensing unit 5. Further the biochemical analyzer 100 dispenses a reagent from the reagent vessel 1 to the reaction vessel 21 by the reagent dispensing unit 4. The biochemical analyzer 100 causes reaction between the specimen and the reagent in the reaction vessel 21 which is kept at a given temperature (e.g., body temperature) suitable for the analysis, and measures an optical characteristic.

The reaction measuring unit 2 is provided with a photometric part 51. The photometric part 51 optically measures a reaction result caused in the reaction vessel 21.

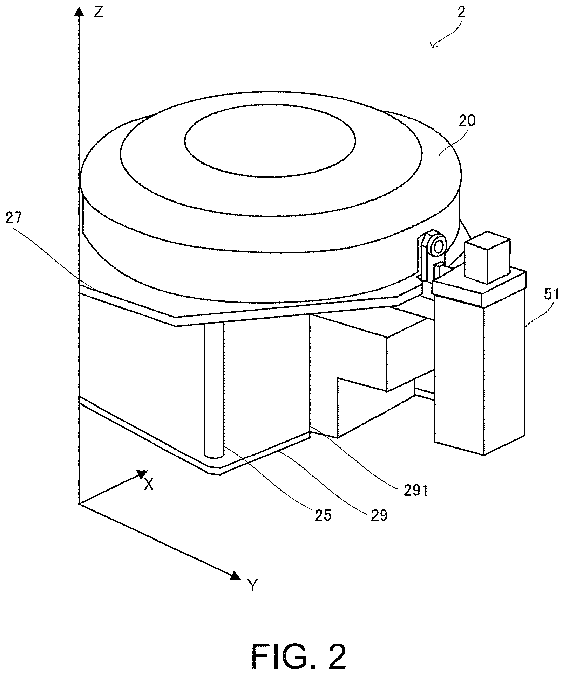

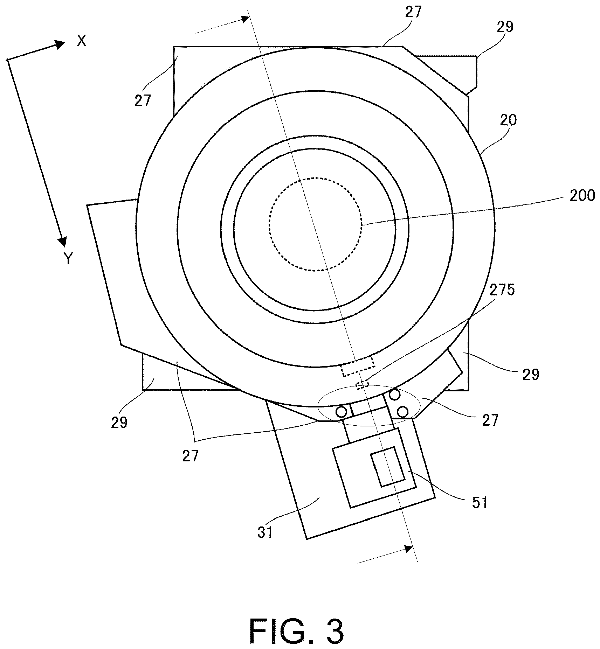

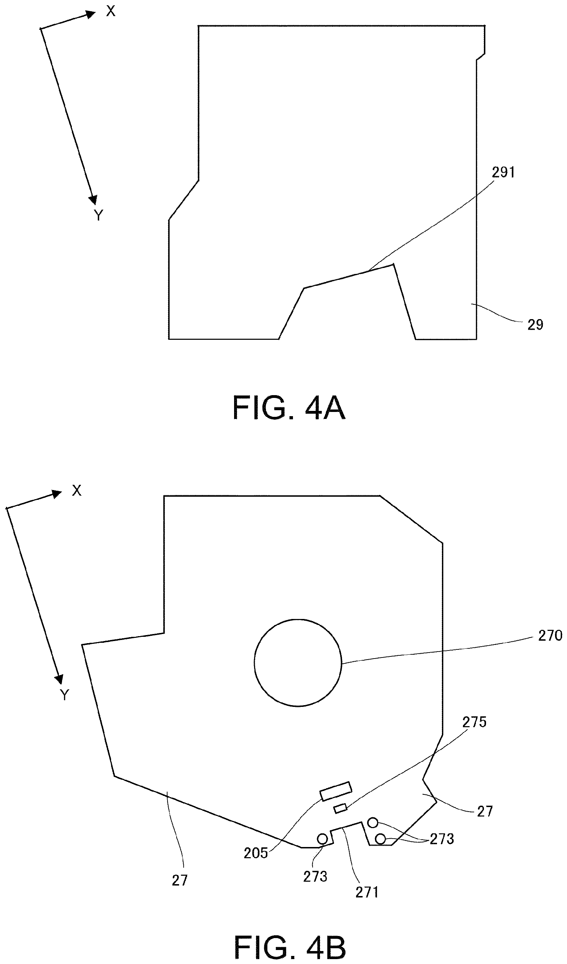

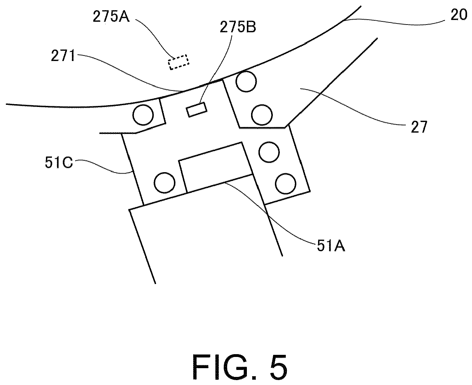

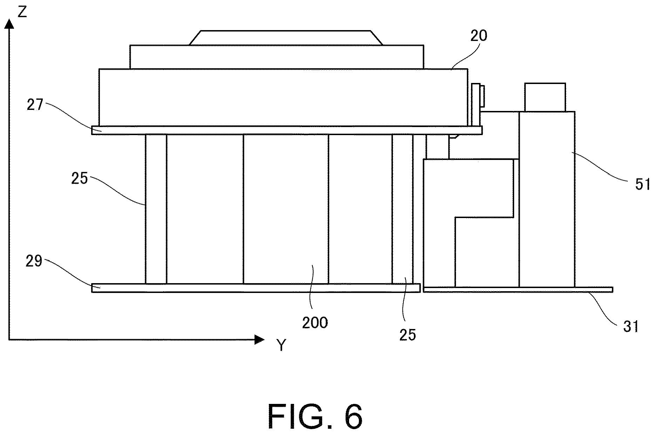

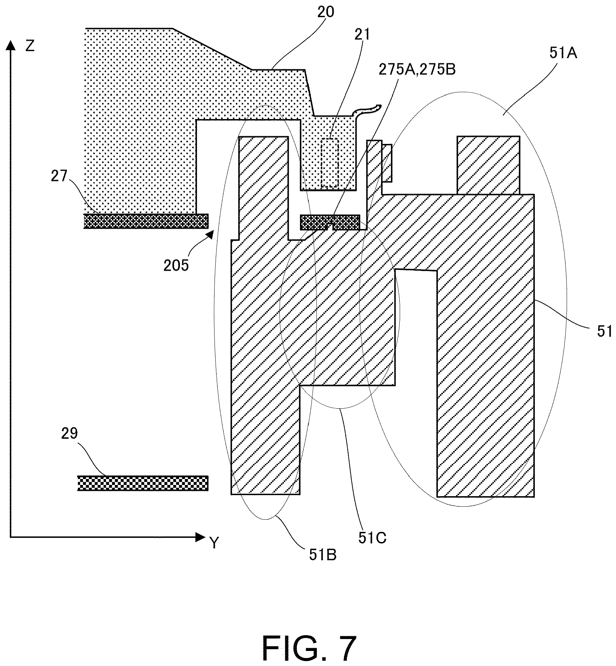

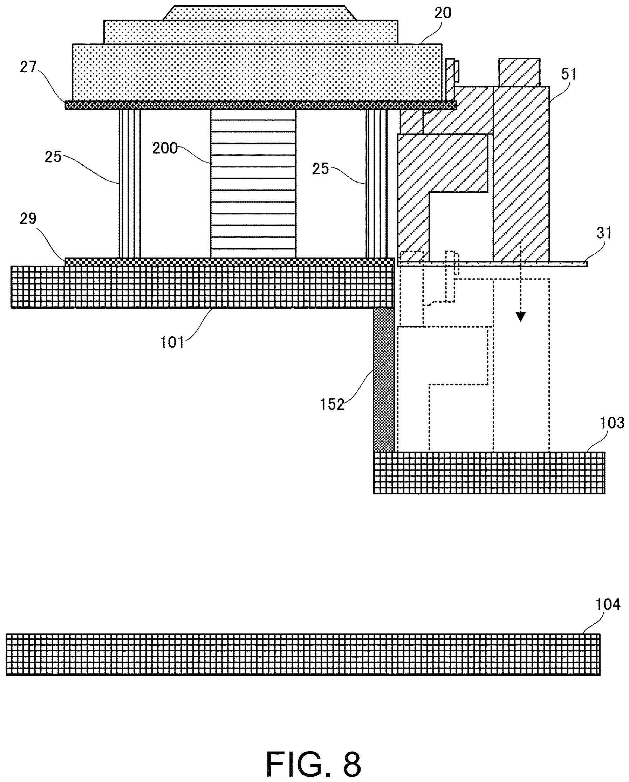

Fig. 2 is a perspective view of the reaction measuring unit 2. Fig. 3 is a plan view of the reaction measuring unit 2. Fig. 4A is a plan view of a bottom plate member 29 and Fig. 4B is a plan view of a supporting member 27. Fig. 5 is a partially-enlarged view of the reaction measuring unit 2. Fig. 6 is a side view of the reaction measuring unit 2. Fig. 7 is a cross-sectional view of the reaction measuring unit 2. Fig. 8 is a partial cross-sectional view of the biochemical analyzer 100.

The reaction container 20 has a cylindrical shape and is supported by the supporting member 27 at its bottom surface. The reaction container 20 contains the large number of reaction vessels 21 in a circumferential part thereof. The reaction container 20 is formed with open sections in a part of a circumferential side surface thereof. Measurement light of the photometric part 51 and light for reading a bar code which identifies each reaction vessel 21 penetrate through the open sections.

The supporting member 27 is a plate-like metal member (e.g., aluminum) and supports the bottom surface of the reaction container 20. As illustrated in Fig. 4B, the supporting member 27 of this embodiment has a polygonal shape in plan view; however, the supporting member 27 may have any shape as long as it is supportable of the reaction container 20.

A shaft part 200 configured to rotate the reaction container 20 is connected to the bottom surface of the reaction container 20. The supporting member 27 has an open section 270 near its center position in plan view, and the shaft part 200 is inserted into the open section 270.

Further a plurality of circular pillars 25 are connected to a bottom surface of the supporting member 27. The plurality of pillars 25 connect the bottom plate member 29 which is separated by a given distance from the supporting member 27, with the supporting member 27.

As illustrated in Fig. 4A, the bottom member 29 of this embodiment has a substantially rectangular shape in plan view; however, the bottom plate member 29 may have any shape. The bottom plate member 29 supports the supporting member 27 via the plurality of pillars 25. Thus, the supporting member 27 is kept above the bottom plate member 29 by a given distance (by the height of the pillars 25). The heights of the pillars 25 are substantially the same as that of the photometric part 51. Thus, the photometric part 51 is kept at a position that an upper end part is at substantially the same height as the reaction container 20.

A bottom surface of the bottom plate member 29 is connected to a housing 10 of the biochemical analyzer 100. As illustrated in the cross-sectional view of Fig. 8, the housing 10 has a multi-layer structure including a first base 101, a second base 103 separated by a given distance from the first base 101, and a third base 104 separated by a given distance from the second base 103. Note that, the housing 10 is not limited to have the three layers and may have a larger number of bases.

The bottom surface of the bottom plate member 29 is connected to the first base 101 disposed as the highest layer. Note that, the bottom plate member 29 is not essential and the pillar 25 may directly be connected to the first base 101.

The first and third bases 101 and 104 are connected by a frame (not illustrated) etc. Structural components, such as a cleanser tank and a pump configured to transport cleanser, are connected with the third base 104. These components are disposed in a space between the first and third bases 101 and 104 or between the second and third bases 103 and 104.

As illustrated in the cross-sectional view of Fig. 7, the photometric part 51 is comprised of a light emission unit 51A (second optical unit) disposed on an opposite side of the reaction container 21 from the center of the reaction chamber 20, a light reception unit 51B (first optical unit) disposed on the other side of the reaction container 21 closer to the center of the reaction container 20, and a connecting unit 51C connecting the light emission unit 51A to the light reception unit 51B. In other words, the photometric part 51 is formed by integrating the light emission unit 51A and the light reception unit 51B with the connecting unit 51C.

Both the light emission unit 51A and the light reception unit 51B have a cuboid shape longer in the height direction (Z-direction). Although the connecting unit 51C also has a cuboid shape, the height is shorter than the light emission unit 51A and the light reception unit 51B.

The light emission unit 51A is built therein with a light source (e.g., white halogen light), a lens etc. The light reception unit 51B receives light emitted by the light emission unit 51A and penetrated the reaction vessel 21, and measures the intensity etc. of the received light. Information regarding the intensity of the measured light is inputted to an analysis unit comprised of a personal computer, for analysis of the specimen.

The positions of the light emission unit 51A, the light reception unit 51B, the reaction container 20, and the plurality of reaction vessels 21 are individually finely adjusted so as to obtain the same measurement condition.

An upper surface of the connecting unit 51C is connected to the bottom surface of the supporting member 27. The supporting member 27 is formed with a plurality of (three, in this embodiment) threaded holes, and the upper surface of the connecting unit 51C is threadedly engaged to the supporting member 27. Note that the number of threaded holes may be two, four or even larger. Note that by having the three threaded holes, an operator can easily adjust the position of the connecting unit 51C to the supporting member 27.

The supporting member 27 is formed with an open section 205 into which the light reception unit 51B is inserted. The open section 205 is formed in part of an overlapped part of the supporting member 27 and the reaction container 20 in plan view. Thus, the light reception unit 51B is inserted into the reaction container 20. Therefore, the light reception unit 51B is capable of receiving the light emitted by the light emission unit 51A and penetrated the reaction vessel 21.

Further as illustrated in Fig. 4B and the enlarged plan view of Fig. 5, an open section (cutout section, in this embodiment) 271 into which a side surface of the light emission unit 51A of the photometric part 51 is fitted is formed in a circumferential side surface of the supporting member 27 (part which does not overlap with the reaction container 20 in plan view). By fitting the side surface of the light emission unit 51A into the open section 271, light from the light emission unit 51A enters the open section in the circumferential side surface of the reaction container 20 (one of the open sections formed at both sides of the reaction vessel 21 of the reaction container 20 illustrated in Fig. 7, here, the open section formed on the light emission unit 51A side).

Further, the supporting member 27 is formed with a hole portion 275A for positioning (engaged member). A protrusion 275B (engaging member) provided in an upper surface of the connecting unit 51C is fitted into the hole portion 275A. Note that, the fitting position of the protrusion 275B may be a concave instead of a hole. For the attaching, the operator can easily attach the photometric part 51 to the supporting member 27 by fitting the protrusion 275B into the hole portion 275A.

Thus, the photometric part 51 is fixed to the supporting member 27 to sandwich the reaction vessel 21 from the both (radial) sides thereof and be suspended at the given position. The suspended position of the photometric part 51 is the upper surface of the connecting unit 51C between the light emission unit 51A and the light reception unit 51B. The center of gravity of the photometric part 51 is located inward (center side of the reaction container 20) from the suspended position of the photometric part 51 in plan view. Thus, the photometric part 51 is stably attached to one of the reaction container 20 and the supporting member 27. Further since the suspended position of the photometric part 51 does not overlap with the reaction container 20 in plan view of the supporting member 27, the operator can easily engage and disengage the thread.

Further in the bottom plate member 29 supporting the supporting member 27, an open section (cutout portion in this embodiment) 291 is formed at the disposed position of the photometric part 51 in plan view. Thus, the photometric part 51 is movable downward of the reaction container 20 once the threads of the connecting unit 51C are removed.

As illustrated in Fig. 8, below the disposed position of the photometric part 51, a space is formed between the first and second bases 101 and 103. For the maintenance of the photometric part 51, by simply disengaging the threads, the photometric part 51 becomes movable downward to this space and circumferentially outward of the reaction container 20 in plan view, and thus, it is possible to be taken out to the outside of the housing 10. Therefore, even if the photometric part 51 is disposed below the reaction container 20, it is possible to remove only the photometric part 51 without removing the reaction container 20 from the supporting member 27. Note that the distance between the first and second bases 101 and 103 is preferably longer than the height corresponding to the inserted part of the photometric part 51 into the reaction container 20, and also equal to or shorter than the entire height of the photometric part 51. Thus, in the maintenance, simply by moving the photometric part 51 downward to be near the second base 103, the upper end part of the photometric part 51 is located below the reaction container 20. As a result, the operator can remove the photometric part 51 without thinking how much the photometric part 51 is to be moved downward. Further, when moving the photometric part 51 downward, the second base 103 is also capable of preventing the photometric part 51 from dropping into the space between the first and third bases 101 and 104.

Moreover, as described above, the positioning hole portion 275A is formed in the supporting member 27, and the protrusion 275B is provided in the upper surface of the connecting unit 51C. Further, the side surface of the supporting member 27 is formed with the open section 271 into which the side surface of the light emission unit 51A of the photometric part 51 is fitted. Furthermore, the supporting member 27 is formed with the plurality of threaded holes at the given positions. Therefore, also when reattaching the photometric part 51 after removing it once, it is attached accurately to a given position.

Note that a partition wall 152 is provided in the space below the disposed position of the photometric part 51, so that the space where the pump, the cleanser etc. are disposed (the space formed by the first and third bases 101 and 104) is separated from the space below the photometric part 51 (the space formed by the first and second bases 101 and 103). Thus, even when removing the photometric part 51 for maintenance, the cleanser tank etc. do not become dirty.

Further, in the space below the photometric part 51, a cover member 31 is disposed at the same height position as that of the first base 101, so that the space below the disposed position of the photometric part 51 is covered at the time of normal use which is not in maintenance.

Note that, the configuration described in this embodiment is merely illustration and not for limitation in all aspects. The scope of this disclosure is not defined by the embodiment described above, but defined by the claims. Furthermore, all of changes falling under the equivalent range of the claims and the claims themselves are intended to be included within the scope of this disclosure. For example, in this embodiment, although the biochemical analyzer is described, an immunoassay analyzer is also one example of the analyzer. The photometric part 51 is suspended from the supporting member 27 supporting the reaction container 20. In an alternative example not comprised in the present invention, the photometric unit (51) may be suspended from the reaction container 20. In this case, the supporting member 27 is not essential. The reaction container 20 may directly be supported to the bottom plate member 29 or the first base 101 by the pillars 25 etc.

## Claims

1. A reaction measuring unit (2), comprising:
- a plurality of reaction vessels (21), each configured to hold a specimen and a reagent;
- a supporting member (27);
- a reaction container (20) holding the plurality of reaction vessels (21), the reaction container (20) being rotatably supported by the supporting member (27); and
- a photometric unit (51) sandwiching at least one of the reaction vessels (21) from opposing sides thereof and suspended from the supporting member (27), and configured to measure the reaction between the specimen and the reagent contained in each reaction vessel (21),
wherein
- the photometric unit (51) is constructed by integrating a first optical unit (51B) disposed on a side of the reaction vessel (21) closer to the axis of rotation of the reaction container (20) than a second optical unit (51A) disposed on the opposite side of the reaction vessel (21) further from the axis of rotation of the reaction container (20);
- the first optical unit (51B) and the second optical unit (51A) are connected by a connecting unit (51C) for forming the photometric unit (51); and wherein
- an upper surface of the connecting unit (51C) is connected to a bottom surface of the supporting member (27).

2. The reaction measuring unit (2) of claim 1, wherein a part of the supporting member (27) overlapping with the reaction container (20) in plan view is formed with an indentation (205) into which the first optical unit (51B) is inserted.

3. The reaction measuring unit (2) of any one of claims 1 and 2, wherein the suspended position of the photometric unit (51) is in a part of the supporting member (27) that does not overlap with the reaction container (20) in plan view.

4. The reaction measuring unit (2) of any one of claims 1 to 3, wherein a part of the supporting member (27) that does not overlap with the reaction container (20) in plan view is formed with an indentation (271) into which the photometric unit (51) is fitted.

5. The reaction measuring unit (2) of any one of claims 1 to 4, wherein the supporting member (27) is provided with a first engaging member (275A) to which a second engaging member (275B) provided in a part of the photometric unit (51) is engaged.

6. The reaction measuring unit (2) of any one of claims 1 to 5, further comprising a bottom plate member (29) separated by a given distance from the supporting member (27) and configured to support the supporting member (27), the bottom plate member (29) formed with an open section (291) at a position where the photometric unit (51) is disposed in plan view.

7. The reaction measuring unit (2) of any one of claims 1 to 6, wherein the photometric unit (51) is suspended from the supporting member (27) so that the center of gravity of the photometric unit (51) is located circumferentially inward from an end part of the supporting member (27).

8. An analyzer (100), comprising:
the reaction measuring unit (2) of any one of claims 1 to 7;
a specimen unit (3); and
a reagent unit (1).

9. The analyzer (100) of claim 8, further comprising a housing (10) accommodating the reaction measuring unit (2), the specimen unit (3), and the reagent unit (1), the housing (10) including:
a first base (101) on which the reaction measuring unit (2), the specimen unit (3), and the reagent unit (1) are disposed;
a second base (103) provided below the first base (101) to be separated by a given distance therefrom; and
a partition wall (152) provided between the first base (101) and the second base (103),wherein a space in which the photometric unit (51) is accommodated is formed by a bottom surface of the first base (101), an upper surface of the second base (103), and the partition wall (152).

10. The analyzer (100) of claim 9, wherein a distance between the first base (101) and the second base (103) is longer than a height dimension of the inserted part of the photometric unit (51) into the reaction container (20) and equal to or shorter than an entire height dimension of the photometric unit (51).

11. The analyzer (100) of claim 9 or 10, further comprising a cover member (31) above the space.

## Patentansprüche

1. Reaktionsmesseinheit (2), umfassend:
eine Vielzahl von Reaktionsgefäßen (21), die jeweils dafür konfiguriert sind, eine Probe und ein Reagenz zu fassen;
ein Tragelement (27);
einen Reaktionsbehälter (20), der die Vielzahl von Reaktionsgefäßen (21) fasst, wobei der Reaktionsbehälter (20) vom Tragelement (27) drehbar getragen wird; und
eine photometrische Einheit (51), die zumindest eines der Reaktionsgefäße (21) von dessen entgegengesetzten Seiten aus sandwichartig aufnimmt und am Tragelement (27) aufgehängt und dafür konfiguriert ist, die Reaktion zwischen der Probe und dem Reagenz, die in jedem Reaktionsgefäß (21) enthalten sind, zu messen,
wobei
die photometrische Einheit (51) aufgebaut ist, indem eine erste optische Einheit (51B) integriert ist, die auf einer Seite des Reaktionsgefäßes (21) angeordnet ist, die näher zur Rotationsachse des Reaktionsbehälters (20) als eine zweite optische Einheit (51A) gelegen ist, die auf der entgegengesetzten Seite des Reaktionsgefäßes (21) weiter entfernt von der Rotationsachse des Reaktionsbehälters (20) angeordnet ist;
die erste optische Einheit (51B) und die zweite optische Einheit (51A) durch eine Verbindungseinheit (51C) zum Ausbilden der photometrischen Einheit (51) verbunden sind; und wobei
eine obere Oberfläche der Verbindungseinheit (51C) mit einer unteren Oberfläche des Tragelements (27) verbunden ist.

2. Reaktionsmesseinheit (2) nach Anspruch 1, wobei ein Teil des Tragelements (27), der in Draufsicht mit dem Reaktionsbehälter (20) überlappt, mit einer Einbuchtung (205) ausgebildet ist, in die die erste optische Einheit (51B) eingesetzt ist.

3. Reaktionsmesseinheit (2) nach einem der Ansprüche 1 und 2, wobei die Aufhängungsposition der photometrischen Einheit (51) in einem Teil des Tragelements (27) liegt, der in Draufsicht nicht mit dem Reaktionsbehälter (20) überlappt.

4. Reaktionsmesseinheit (2) nach einem der Ansprüche 1 bis 3, wobei ein Teil des Tragelements (27), der in Draufsicht nicht mit dem Reaktionsbehälter (20) überlappt, mit einer Einbuchtung (271) ausgebildet ist, in die die photometrische Einheit (51) eingepasst ist.

5. Reaktionsmesseinheit (2) nach einem der Ansprüche 1 bis 4, wobei das Tragelement (27) mit einem ersten Eingriffselement (275A) versehen ist, mit welchem ein zweites Eingriffselement (275B), das in einem Teil der photometrischen Einheit (51) vorgesehen ist, in Eingriff gebracht ist.

6. Reaktionsmesseinheit (2) nach einem der Ansprüche 1 bis 5, ferner umfassend ein Bodenplattenelement (29), das durch einen gegebenen Abstand vom Tragelement (27) getrennt und dafür konfiguriert ist, um das Tragelement (27) zu tragen, wobei das Bodenplattenelement (29) mit einer offenen Sektion (291) an einer Position ausgebildet ist, wo in Draufsicht die photometrische Einheit (51) angeordnet ist.

7. Reaktionsmesseinheit (2) nach einem der Ansprüche 1 bis 6, wobei die photometrische Einheit (51) am Tragelement (27) so aufgehängt ist, dass der Schwerpunkt der photometrischen Einheit (51) umlaufend einwärts von einem Endteil des Tragelements (27) gelegen ist.

8. Analysator (100), umfassend:
die Reaktionseinheit (2) nach einem der Ansprüche 1 bis 7;
eine Probeneinheit (3); und
eine Reagenzeinheit (1).

9. Analysator (100) nach Anspruch 8, ferner umfassend ein Gehäuse (10), das die Reaktionsmesseinheit (2), die Probeneinheit (3) und die Reagenzeinheit (1) beherbergt, wobei das Gehäuse (10) umfasst:
eine erste Basis (101), auf der die Reaktionsmesseinheit (2), die Probeneinheit (3) und die Reagenzeinheit (1) angeordnet sind;
eine zweite Basis (103), die unterhalb der ersten Basis (101) so vorgesehen ist, dass sie um einen gegebenen Abstand davon getrennt ist; und
eine Trennwand (152), die zwischen der ersten Basis (101) und der zweiten Basis (103) vorgesehen ist, wobei ein Raum, in welchem die photometrische Einheit (51) untergebracht ist, von einer unteren Oberfläche der ersten Basis (101), einer oberen Oberfläche der zweiten Basis (103) und der Trennwand (152) gebildet wird.

10. Analysator (100) nach Anspruch 9, wobei der Abstand zwischen der ersten Basis (101) und der zweiten Basis (103) länger als eine Höhenabmessung des eingesetzten Teils der photometrischen Einheit (51) in den Reaktionsbehälter (20) und gleich einer oder kürzer als eine gesamte Höhenabmessung der photometrischen Einheit (51) ist.

11. Analysator (100) nach Anspruch 9 oder 10, ferner umfassend ein Abdeckelement (31) über dem Raum.

## Revendications

1. Unité de mesure de réaction (2) comprenant :
- une pluralité de réacteurs (21) configurés chacun pour contenir un échantillon et un réactif ;
- un organe de support (27) ;
- un récipient de réaction (20) contenant la pluralité de réacteurs (21), le récipient de réaction (20) étant supporté à rotation par l'organe de support (27) ; et
- une unité photométrique (51) prenant en sandwich l'un au moins des réacteurs (21), depuis leurs côtés opposés, et suspendue à l'organe de support (27), et configurée pour mesurer la réaction entre l'échantillon et le réactif contenu dans chaque réacteur (21),
dans laquelle
- l'unité photométrique (51) est construite en intégrant une première unité optique (51B) disposée sur un côté du réacteur (21) plus proche de l'axe de rotation du récipient de réaction (20) qu'une deuxième unité optique (51A) disposée sur le côté opposé du réacteur (21) plus éloigné de l'axe de rotation du récipient de réaction (20) ;
- la première unité optique (51B) et la deuxième unité optique (51A) sont reliées par une unité de liaison (51C) pour former l'unité photométrique (51) ; et
dans laquelle
- une surface supérieure de l'unité de liaison (51C) est reliée à une surface inférieure de l'organe de support (27).

2. Unité de mesure de réaction (2) de la revendication 1, dans laquelle une partie de l'organe de support (27) empiétant sur le récipient de réaction (20), vu en plan, est pourvue d'une échancrure (205) dans laquelle est insérée la première unité optique (51B).

3. Unité de mesure de réaction (2) de l'une des revendications 1 et 2, dans laquelle la position suspendue de l'unité photométrique (51) se trouve dans une partie de l'organe de support (27) qui n'empiète pas sur le réacteur (20), vu en plan.

4. Unité de mesure de réaction (2) de l'une des revendications 1 à 3, dans laquelle une partie de l'organe de support (27) qui n'empiète pas sur le récipient de réaction (20), vu en plan, est pourvue d'une échancrure (271) dans laquelle est montée la première unité optique (51).

5. Unité de mesure de réaction (2) de l'une des revendications 1 à 4, dans laquelle l'organe de support (27) est pourvu d'un premier organe de prise (275A) avec lequel un deuxième organe de prise (275B) prévu dans une partie de l'unité photométrique (51) est en prise.

6. Unité de mesure de réaction (2) de l'une des revendications 1 à 5, comprenant également un organe formant plaque inférieure (29) séparée par une distance donnée de l'organe de support (27) et configuré pour supporter l'organe de support (27), l'organe formant plaque inférieure (29) étant pourvu d'une section ouverte (291) à un endroit où l'unité photométrique (51) est disposée, vue en plan.

7. Unité de mesure de réaction (2) de l'une des revendications 1 à 6, dans laquelle l'unité photométrique (51) est suspendue à l'organe de support (27) de telle sorte que le centre de gravité de l'unité photométrique (51) soit situé circonférentiellement vers l'intérieur, à partir d'une partie d'extrémité de l'organe de support (27).

8. Analyseur (100) comprenant :
l'unité de mesure de réaction (2) de l'une des revendications 1 à 7 ;
une unité d'échantillon (3) ; et
une unité de réactif (1).

9. Analyseur (100) de la revendication 8, comprenant également un caisson (10) qui loge l'unité de mesure de réaction (2), l'unité d'échantillon (3) et l'unité de réactif (1), le caisson (10) contenant :
une première base (101) sur laquelle sont disposées l'unité de mesure de réaction (2), l'unité d'échantillon (3) et l'unité de réactif (1) ;
une deuxième base (103) disposée au-dessous de la première base (101) et à séparer de celle-ci par une distance donnée ; et
une cloison (152) disposée entre la première base (101) et la deuxième base (103), dans lequel un espace dans lequel est logée l'unité photométrique (51) est formé par une surface inférieure de la première base (101), une surface supérieure de la deuxième base (103) et la cloison (152).

10. Analyseur (100) de la revendication 9, dans lequel une distance entre la première base (101) et la deuxième base (103) est plus grande qu'une dimension de hauteur de la partie insérée de l'unité photométrique (51) dans le récipient de réaction (20), et égale ou inférieure à une dimension de hauteur totale de l'unité photométrique (51).

11. Analyseur (100) de la revendication 9 ou 10, comprenant également un organe formant couvercle (31) au-dessus de l'espace.
